# EUROPÄISCHE PATENTSCHRIFT

(11) **EP 1 705 088 B1**
(45) Veröffentlichungstag und Bekanntmachung des Hinweises auf die Patenterteilung: **19.11.2008**
(21) Anmeldenummer: 05028349.8
(22) Anmeldetag: 23.12.2005
(51) Int. Cl.: B60T 7/10

(54) **Betätigungselement mit einem Trägerteil und einem endseitigen Designteil, insbesondere für ein Fahrzeug**
Actuator with a carrier part and a designed end cap, preferably for a vehicle
Actionneur et son support ainsi que son cache stylisé, en particulier pour un véhicule

(30) Priorität: 26.03.2005 DE 102005014016
(43) Veröffentlichungstag der Anmeldung: 27.09.2006
(73) Patentinhaber: AUDI AG, 85045 Ingolstadt (DE)
(72) Erfinder: Henrich, Uwe, 85072 Eichstätt (DE); Brok, Tobias, 85051 Ingolstadt (DE); Schneider, Werner, 85051 Ingolstadt (DE)
(74) Vertreter: Asch, Konrad

(56) Entgegenhaltungen:
- DE-A1- 10 059 789
- PATENT ABSTRACTS OF JAPAN Bd. 2000, Nr. 21, 3. August 2001 (2001-08-03) & JP 2001 106043 A (NISSAN MOTOR CO LTD), 17. April 2001 (2001-04-17)
- PATENT ABSTRACTS OF JAPAN Bd. 1998, Nr. 03, 27. Februar 1998 (1998-02-27) & JP 09 290659 A (SUZUKI MOTOR CORP), 11. November 1997 (1997-11-11)

## Beschreibung

Die Erfindung betrifft ein Betätigungselement mit einem Trägerteil und einem endseitigen Designteil, insbesondere für ein Fahrzeug, nach dem Oberbegriff des Anspruchs 1.

Ein solches Betätigungselement ist beispielsweise eine Druckstange eines bekannten Handbremshebels eines Fahrzeugs (DE 102 36 593 A1 oder DE 10059789 A1). Dieser besteht aus einem rohrförmigen und schwenkbar gegenüber einem ortsfesten Zahnsegment gelagerten Zughebelteil mit einem Griffteil und der darin geführten Druckstange. Diese ist mit einer betätigbaren Rastklinke verbunden, die bei einem Zug am Zughebel über das Zahnsegment gleitet und federbelastet entsprechend der Zughebelstellung einrastet. Die Druckstange ragt mit einem Druckknopf als Designteil endseitig aus dem Zughebelteil. Durch einen Druck auf den Druckknopf wird die Rastklinke gelöst und der Zughebel kann zur Freigabe der angeschlossenen Feststellbremse in seine Ausgangsposition zurückgeführt werden. Die Druckstange und dessen endseitig aus dem Zughebel ragender Druckknopf sind hier in üblicher Weise einteilig ausgebildet.

Die Druckstange ist somit hier ein Trägerteil und der Druckknopf ein endseitiges im Fahrzeuginnenraum sichtbares Designteil, welches der übrigen Anmutung im Fahrzeuginnenraum gestalterisch und gegebenenfalls farblich anzupassen ist. Nachteilig ist bei einer solchen Ausführung ein erhöhter logis-tischer Aufwand und Lageraufwand für Druckstangen mit Druckknöpfen unterschiedlicher Oberflächen und Farbvariationen für zugeordnete unterschiedliche Innenraumausstattungen. Zudem muss im Falle einer Beschädigung am sichtbaren Druckknopf der gesamte Handbremshebel getauscht werden.

Ähnliche Gegebenheiten wie beim vorstehenden Handbremshebel liegen auch für andere Betätigungselemente, wie beispielsweise für Griffteile sowie für Druck- und Drehknöpfe, insbesondere an einem Fahrzeug vor.

Aufgabe der Erfindung ist es demgegenüber, ein Betätigungselement, insbesondere für ein Fahrzeug vorzuschlagen, das bei einfachem Aufbau und guter Funktion flexibel einsetzbar ist.

Diese Aufgabe wird mit den Merkmalen des Anspruchs 1 gelöst.

Gemäß Anspruch 1 sind das Trägerteil und das Designteil zwei separate Bauteile, wobei das Designteil einen Endabschnitt des Trägerteils übergreift und dort verrastet ist. Zudem ist das Designteil einerseits durch die Rastverbindung entgegen der Aufsteckrichtung gegen ein Abziehen am End abschnitt des Trägerteils gehalten und gesichert. Andererseits ist das Designteil in Aufsteckrichtung über ein vorgespanntes Federelement am Trägerteil abgestützt.

Allein die zweiteilige Ausführung und Verrastung oder Verclipsung des Trägerteils und des Designteils führt noch zu keiner befriedigenden Lösung: zwar ergibt sich dadurch bereits ein einfacher Aufbau und eine einfache Montage, wobei Variationen in den Oberflächen und Farben sowie Beschädigungen am Designteil nur dieses betreffen, das Trägerteil jeweils als Gleichteil ausgeführt werden kann. Der Herstellaufwand, logistische Aufwand und Lageraufwand sowie gegebenenfalls ein Reparaturaufwand bei Beschädigungen können damit erheblich reduziert werden. Allerdings ergeben sich durch die Verrastung in Verbindung mit einem Spiel zwischen dem Trägerteil und dem aufgesteckten Designteil akustische Probleme durch Relativbewegungen und dadurch verursachte Klappergeräusche im Fahrbetrieb sowie gegebenenfalls Beeinträchtigungen der Haptik. Wird dieses Spiel zur Reduzierung dieser Probleme stark verringert, wird die Aufsteckmontage des Designteils, insbesondere durch Fertigungstoleranzen, schwergängig und führt gegebenenfalls zum Ausschuss von Teilen. Eine wesentliche Verbesserung wird dagegen erfindungsgemäß dadurch erzielt, dass das Designteil einerseits durch die Rastverbindung entgegen der Aufsteckrichtung gegen ein Abziehen gehalten und gesichert ist und sich andererseits in Aufsteckrichtung über das vorgespannte Federelement am Trägerteil abstützt. Durch diese elastisch vorgespannte Abstützung und Verklemmung des Designteils am Trägerteil, wird ein Klappern im Fahrbetrieb auch bei größeren Toleranzen verhindert. Durch größere mögliche Toleranzen wird auch die Aufsteckmontage vereinfacht und der Ausschuss von Teilen verringert. Weiter tritt keine Haptikverschlechterung durch Kraftsprünge bei der Betätigung auf.

Nach Anspruch 2 ist das Designteil in Form einer Aufsteckkappe als Druckknopf ausgeführt, die auf eine zugeordnete Druckstange aufgesteckt ist. In einer bevorzugten Anwendung ist dies eine Druckstange eines Handbremshebels, wobei der Druckknopf endseitig aus dem Handbremshebel hervorragt. Auf den Druckknopf werden hier im wesentlichen Betätigungskräfte in Richtung der Druckstange aufgebracht.

Der erfindungsgemäße Aufbau aus Trägerteil und Designteil ist gemäß Anspruch 3 auch bei einem Drehbetätigungselement anwendbar. Dazu ist auch hier das Designteil in der Form einer Aufsteckkappe als Drehknopf ausgeführt, wobei die Aufsteckkappe auf eine zugeordnete Drehbetätigungswelle aufgesteckt ist. Zur Übertragung eines Drehmoments zwischen der Aufsteckkappe und der Drehbetätigungswelle sind hier an sich bekannte Verdrehsicherungselemente vorzusehen, die in der Rastverbindung und/oder in der Aufsteckführung, beispielsweise in der Art einer Keilwelle integriert sein können.

Bei einer konkreten bevorzugten Ausführungsform nach Anspruch 4 ist im kappenförmigen Designteil im Aufsteckbereich wenigstens ein Rastfenster vorgesehen und am Trägerteil ist wenigstens eine elastische zugeordnete Rastnase angebracht. Die Rastnase steht in Aufsteckrichtung und in Radialrichtung schräg vom Trägerteil ab und ist so dimensioniert, dass sie beim Aufstecken elastisch in einen Freiraum im Innenbereich der Aufsteckkappe einschwenkt. Wenn das zugeordnete Rastfenster über der Rastnase liegt, schwenkt diese zurück in das Rastfenster und stützt sich an der in Aufsteckrichtung liegenden Fensterkante ab. Das die Vorspannung aufbringende Federelement kann dabei nach Anspruch 5 in einfacher Weise am Trägerteil in Aufsteckrichtung versetzt zur Rastnase angebracht sein. Wesentlich ist dabei, dass das Federelement in Aufsteckrichtung elastisch nachgiebig ist und sich die Aufsteckkappe im Rastzustand unter Vorspannung daran abstützt.

In einer konstruktiv einfachen Lösung kann dieses Federelement gemäß Anspruch 6 als vom Trägerteil abstehende Federnase oder als umlaufender Federbund ausgeführt sein. Zweckmäßig stützt sich die Abdeckkappe daran mit einer Stufe im Kappeninnenbereich am Federelement ab.

In einer Weiterbildung nach Anspruch 7 kann für eine abgestufte Spielreduzierung die Möglichkeit einer mehrstufigen Verrastung vorgesehen sein. Je nach konstruktiver Ausführung können dabei die Rastfenster und die zugeordneten Rastnasen unterschiedliche Längslagen in Aufsteckrichtung aufweisen und/oder selbst in der Längserstreckung variieren. Wesentlich ist aber auch bei dieser mehrstufigen Verrastmöglichkeit, dass in jedem Fall eine Vorspannung durch ein entsprechend angeordnetes Federelement in der jeweiligen Montagestellung vorliegt.

In einer alternativen konkreten Ausführungsform nach Anspruch 8 weist das kappenförmige Designteil wenigstens eine, vorzugsweise mehrere in den Kappeninnenbereich schräg entgegen der Aufsteckrichtung elastisch abstehende Rastnasen auf. Gegebenenfalls kann hier auch ein entsprechend geformter Rastring verwendet werden. Am Trägerteil ist ein den Rastnasen zugeordneter Rastvorsprung, vorzugsweise ein umlaufender Rastbund angebracht. Beim Aufstecken des Designteils auf das Trägerteil schwenken die Rastnasen elastisch nach radial außen und werden dabei über den Rastvorsprung geführt. Nach einem weiteren Aufsteckweg schwenken die Rastnasen hinter den Rastvorsprung wieder nach radial innen zurück und rasten dadurch ein. Wesentlich ist auch bei dieser Ausführungsform, dass im verrasteten Zustand eine Federvorspannung entgegen der Aufsteckrichtung aufgebracht wird. Dies kann hier einfach nach Anspruch 9 mit einem Druckfederelement zwischen der endseitigen Stirnfläche des Trägerteils und der Innenfläche des Kappendeckels erreicht werden. Als Druckfederelement kann beispielsweise eine Druckspiralfeder oder ein Druckpolster aus Elastomermaterial verwendet werden. Ein solches Druckfederelement kann bei der weiter oben beschriebenen Ausführungsform mit der Verrastung durch Rastfenster und Rastnasen verwendet werden.

Einfache Verhältnisse hinsichtlich der Konstruktion, der Herstellung und der Montage ergeben sich, wenn nach Anspruch 10 das Trägerteil und das Designteil um eine Längsachse rotationssymmetrisch ausgebildet sind.

Bevorzugt werden dazu nach Anspruch 11 das kappenförmige Designteil sowie gegebenenfalls das Trägerteil und das Federelement zumindest teilweise aus Kunststoff hergestellt.

Anhand einer Zeichnung wird die Erfindung weiter erläutert.

Es zeigen:
- **Fig. 1**: einen Längsschnitt durch den Endbereich eines Betätigungselements, hier eines Handbremshebels, in einer ersten Ausführungsform, und
- **Fig. 2**: ein entsprechendes Betätigungselement in einer zweiten Ausführungsform.

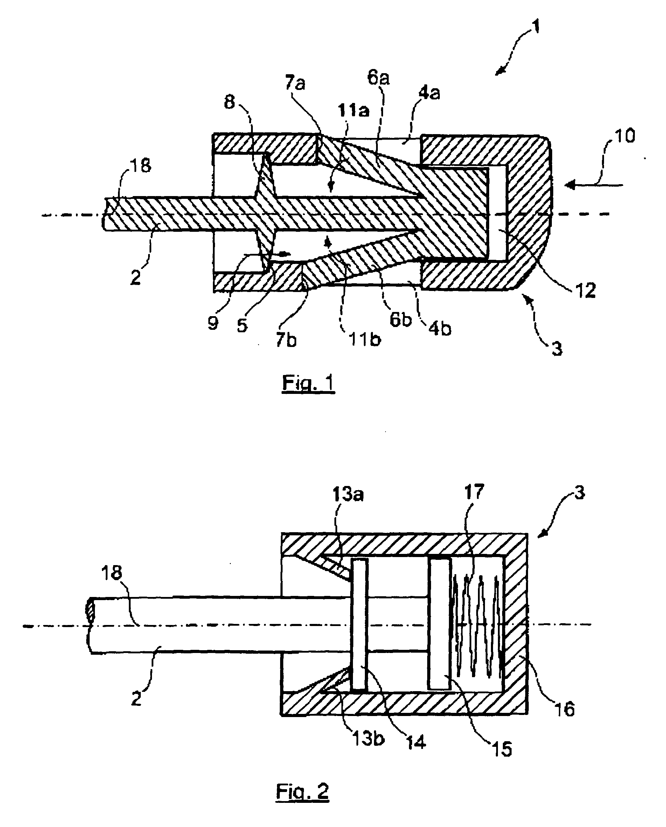

In **Fig. 1** ist ein Betätigungselement 1 einer ersten Ausführungsform gezeigt, mit einem Trägerteil 2 als Druckstange eines Handbremshebels und einem daran in einem Endabschnitt aufgesteckten kappenförmigen Designteil 3.

Das Designteil 3 ist mit einer zylindrischen Innenform an das Trägerteilende angepasst und dort formschlüssig aufgesteckt. Zudem weist das Designteil 3 an der Zylinderumfangfläche zwei gegenüberliegende Rastfenster 4a, 4b auf und in Aufsteckrichtung dazu versetzt eine innenseitige Abstützstufe 5.

Am Trägerteil 2 sind elastische gegenüberliegende und den beiden Rastfenstern 4a, 4b zugeordnete Rastnasen 6a, 6b angeformt, die in Aufsteckrichtung und Radialrichtung schräg vom Trägerteil 2 abstehen. In der dargestellten montierten Position greifen die Rastnasen 6a, 6b jeweils in die Rastfenster 4a, 4b ein und stützen sich mit ihren Endflächen an den in Aufsteckrichtung liegenden Fensterkanten 7a, 7b ab.

Am Trägerteil 2 und in Aufsteckrichtung versetzt zu den Rastnasen 6a, 6b ist ein Federelement 8 in der Art eines elastischen umlaufenden Bundes angeformt, der sich an der Abstützstufe 5 abstützt. Im dargestellten montierten Zustand ist das Federelement 8 vorgespannt, mit einer Vorspannkraft entgegen der Aufsteckrichtung, die mit Pfeil 9 dargestellt ist, so dass das Designteil 3 zwischen den Rastnasen 6a, 6b und dem Federelement 8 unter Vorspannung gehalten ist. Bei einem Druck auf den Kappendeckel (Pfeil 10) des Designteils 3 als Druckknopf wird dieses ersichtlich am Federelement 9 abgestützt.

Beim Aufsteckvorgang schwenken die Rastnasen 6a, 6b nach radial innen (Pfeile 11 a, 11 b), so dass das kappenartige Designteil 3 so weit darübergesteckt werden kann, bis deren Rastfenster 4a, 4b über den zugeordneten Rastnasen 6a, 6b zu liegen kommen und in diese hinein elastisch zurückschwenken.

Das Rastfenster 4a und die zugeordnete Rastnase 6a sind im Vergleich zu dem gegenüberliegenden Rastfenster 4b und der Rastnase 6b in ihrer Längserstreckung kürzer ausgeführt. Dies soll lediglich schematisch andeuten, dass hier unterschiedliche Geometrien und Dimensionierungen möglich sind, wobei insbesondere auch eine mehrstufige Verrastung möglich ist. Wenn beispielsweise auch das Rastfenster 4b in der gleichen Längserstreckung wie das Rastfenster 4a gewählt wäre, würde in der Darstellung die längere Rastnase 6b noch nach radial innen verschwenkt sein und noch nicht in das Rastfenster 4b eingerastet sein. Es wäre dann für eine Vergrößerung der elastischen Vorspannung (Pfeil 9) und zum Ausgleich von eventuellen Fertigungstoleranzen möglich das Designteil 3 weiter in Aufsteckrichtung nachzudrücken, was wegen des Freiraums 12 möglich wäre. Dann würde im weiter nachgedrückten Zustand die längere Rastnase 6b im Rastfenster 4b einrasten und an der Fensterkante 7b anliegen, die Rastnase 6a würde dagegen von der Fensterkante 7a um den gleichen Betrag abgehoben sein.

In der Ausführungsform nach **Fig. 2** ist ebenfalls auf einen Endabschnitt eines Trägerteils 2 ein kappenförmiges Designteil 3 aufgesteckt. Auch hier ist das Trägerteil eine Druckstange eines Handbremshebels und das Designteil 3 ein endseitiger Druckknopf.

Gegenüber der Ausführungsform nach **Fig. 1** ist hier die Rastverbindung anders ausgeführt, indem am Designteil 3 elastisch in dessen Innenraum abstehende Rastnasen 13a, 13b angeformt sind. Diese Rastnasen 13a, 13b stehen schräg entgegen der Aufsteckrichtung ab. Im montierten dargestellten Zustand hintergreifen die Rastnasen 13a, 13b einen Rastbund 14 am Trägerteil 2 für eine Abstützung in Aufsteckrichtung. Für eine gegenseitige Vorspannung zwischen dem Trägerteil 2 und dem Designteil 3 ist bei dieser Ausführungsform zwischen einem scheibenförmigen Stirnseitenteil 15 des Trägerteils 2 und der Innenfläche des Kappendeckels 16 ein vorgespanntes Druckfederelement 17, hier schematisch als Druckspiralfeder dargestellt, eingesetzt. Damit ist auch bei dieser Ausführungsform das Designteil 3 unter einer Vorspannung über eine Rastverbindung am Trägerteil 2 gehalten und abgestützt.

## Patentansprüche

1. Betätigungselement mit einem Trägerteil (2) und einem endseitigen Designteil (3), insbesondere für ein Fahrzeug, wobei das Trägerteil (2) und das Designteil (3) zwei separate Bauteile sind und das Designteil (3) einen Endabschnitt des Trägerteils (2) übergreift und dort formangepasst geführt aufgesteckt ist,
**dadurch gekennzeichnet,**
**dass** das Designteil (3) einerseits durch eine Rastverbindung (4a, 4b, 6a, 6b, 13a, 13b, 14) entgegen der Aufsteckrichtung gegen ein Abziehen am Endabschnitt des Trägerteils (2) gehalten und gesichert ist und dabei andererseits in Aufsteckrichtung über ein vorgespanntes Federelement (8; 17) am Trägerteil (2) abgestützt ist.

2. Betätigungselement nach Anspruch 1, **dadurch gekennzeichnet, dass** das Designteil (3) eine Aufsteckkappe als Druckknopf ist, die auf ein Trägerteil (2) als Druckstange, insbesondere auf eine Druckstange eines Handbremshebels aufgesteckt ist.

3. Betätigungselement nach Anspruch 1, **dadurch gekennzeichnet, dass** das Designteil (3) eine Aufsteckkappe als Drehknopf ist, die auf eine zugeordnete Drehbetätigungswelle aufgesteckt ist, wobei die Rastverbindung und/oder die Aufsteckführung Verdrehsicherungselemente aufweist.

4. Betätigungselement nach einem der Ansprüche 2 bis 3, **dadurch gekennzeichnet, dass** das Designteil (3) als Aufsteckkappe im Aufsteckbereich wenigstens ein Rastfenster (4a, 4b) aufweist, dass am Trägerteil (2) wenigstens eine elastische Rastnase (6a, 6b) angebracht ist, die in Aufsteckrichtung und in Radialrichtung schräg vom Trägerteil (2) absteht und die so dimensioniert ist, dass sie beim Aufstecken elastisch in einem Freiraum im Innenbereich der Aufsteckkappe (3) einschwenkt und bei einer Überdeckung durch das Rastfenster (4a, 4b) in dieses hinein zurückschwenkt und sich an der in Aufsteckrichtung liegenden Fensterkante (7a, 7b) abstützt.

5. Betätigungselement nach Anspruch 4, **dadurch gekennzeichnet, dass** am Trägerteil (2) in Aufsteckrichtung versetzt zu der wenigstens einen Rastnase (6a, 6b) ein Federelement (8) angebracht ist, an dem sich die Aufsteckkappe (3) unter Vorspannung abstützt.

6. Betätigungselement nach Anspruch 5, **dadurch gekennzeichnet, dass** das Federelement wenigstens eine elastisch radial vom Trägerteil abstehende Federnase oder ein umlaufender Federbund (8) ist, an dem sich eine Abstützstufe (5) im Inneren der Aufsteckkappe (3) abstützt.

7. Betätigungselement nach einem der Ansprüche 4 bis 6, **dadurch gekennzeichnet, dass** wenigstens zwei am Umfang versetzte Rastfenster (4a, 4b) und zugeordnete Rastnasen (6a, 6b) angebracht sind, wobei für eine mehrstufige Verrastung die Rastfenster (4a, 4b) und zugeordnete Rastnasen (6a, 6b) unterschiedliche Längslagen und/oder unterschiedliche Längserstreckungen aufweisen.

8. Betätigungselement nach einem der Ansprüche 1 bis 3, **dadurch gekennzeichnet, dass** das Designteil (3) als Aufsteckkappe wenigstens eine vorzugsweise mehrere in dem Kappeninnenbereich schräg entgegen der Aufsteckrichtung elastisch abstehende Rastnasen (13a, 13b) aufweist, und dass am Trägerteil (2) ein den Rastnasen (13a, 13b) zugeordneter Rastvorsprung (14), vorzugsweise ein Rastbund angebracht ist, wobei beim Aufstecken die Rastnasen (13a, 13b) elastisch nach radial außen schwenken und über den Rastvorsprung (14) geführt werden und danach hinter dem Rastvorsprung (14) nach radial innen zurückschwenken und einrasten.

9. Betätigungselement nach einem der Ansprüche 4 bis 8, **dadurch gekennzeichnet, dass** zwischen der endseitigen Stirnfläche (15) des Trägerteils (2) und der Innenfläche des Kappendeckeis (16) ein Druckfederelement (17) angeordnet ist.

10. Betätigungselement nach einem der Ansprüche 1 bis 9, **dadurch gekennzeichnet, dass** das Trägerteil (2) und Designteil (3) um eine Längsachse (18) rotationssymmetrisch ausgebildet sind.

11. Betätigungselement nach einem der Ansprüche 2 bis 10, **dadurch gekennzeichnet, dass** das Trägerteil (2) und/oder das Designteil (3) und/oder das Federelement (8; 17) zumindest teilweise aus Kunststoff hergestellt sind.

## Claims

1. Actuating element with a carrier part (2) and an end side design part (3), in particular for a motor vehicle, in which the carrier part (2) and the design part (3) are two separate components and the design part (3) overlaps an end section of the carrier part (2) and is taken there stuck on with adapted shape,
**characterised by the fact**
that the design part (3) is held and ensured on the one side by a click-stop connection (4a, 4b, 6a, 6b, 13a, 13b, 14) towards the stick-on direction against a withdrawal at the end section of the carrier part (2) and with it on the other side in the stick-on direction it is supported via a pretensioned spring element (8, 17) on the carrier part (2).

2. Actuating element according to claim 1, **characterised by the fact that** the design part (3) is a stick-on cap as a press-button, which is stuck on a carrier part (2) as a pressure rod, in particular on a pressure rod of a hand brake lever.

3. Actuating element according to claim 1, **characterised by the fact that** the design part (3) is a stick-on cap as a rotary knob, which is stuck on an attached rotation actuating shaft, wherewith the click-stop connection and/or the stick-on lead exhibits torsion safety elements.

4. Actuating element according to one of the claims 2 to 3, **characterised by the fact that** the design part (3) exhibits as a stick-on cap in the stick-on region at least one stop window (4a, 4b), that on the carrier part (2) at least one elastic stop lug (6a, 6b) is fitted, which in the stick-on direction and in the radial direction projects obliquely from the carrier part (2) and which is so dimensioned that with sticking on elastically in a free space in the internal area of the stick-on cap (3) it swings in and with an overloading through the stop window (4a, 4b) swings back into this and supports itself on the window edge (7a, 7b) situated in the stick-on direction.

5. Actuating element according to claim 4, **characterised by the fact that** on the carrier part (2), moved in the stick-on direction to the at least one stop lug (6a, 6b), a spring element is fitted on which the stick-on cap (3) supports itself under pretensioning.

6. Actuating element according to claim 5, **characterised by the fact that** the spring element is at least one spring lug, projecting elastically radially from the carrier part, or an encircling spring shackle (8), on which a support stage (5) inside the stick-on cap (3) supports itself.

7. Actuating element according to one of the claims 4 to 6, **characterised by the fact that** at least two moved stop windows (4a, 4b) and attached stop lugs (4a, 4b) are fitted, where for a multi-stage stopping the stop windows (4a, 4b) and the attached stop lugs exhibit different length situations and/or length extensions.

8. Actuating element according to one of the claims 1 to 3, **characterised by the fact that** the design part (3) as stick-on cap exhibits at least one but preferably several stop lugs (13a, 13b) elastically projecting in the internal area of the cap opposite to the stick-on direction, and that on the carrier part (2) a stop-click device (14) attached to the stop lugs (13a, 13b) preferably a spring shackle is fitted, whereby, at the sticking on, the stop lugs (13a, 13b) swing elastically to radially outwards and are brought across the click-stop device (14) and then swing back behind the click-stop device (14) to radially inwards and engage.

9. Actuating element according to one of the claims 4 to 8, **characterised by the fact that** between the end side frontal surface (15) of the carrier part (2) and the internal surface of the cap cover (16) a compression spring element (17) is fitted.

10. Actuating element according to one of the claims 1 to 9, **characterised by the fact that** the carrier part (2) and design part (3) are formed rotation symmetrically around a longitudinal axis.

11. Actuating element according to one of the claims 2 to 10, **characterised by the fact that** the carrier part (2) and/or the design part (3) and/or the spring element (8; 17) are produced at least partly from plastic.

## Revendications

1. Élément d'actionnement avec une partie de support (2) et une partie stylisée (3) côté extrémité, en particulier pour un véhicule, la partie de support (2) et la partie stylisée (3) étant deux composants séparés et la partie stylisée (3) recouvrant un segment d'extrémité de la partie de support (2) et y étant montée de manière guidée et conforme,
**caractérisé en ce**
**que** la partie stylisée (3) est maintenue et bloquée d'une part par un assemblage par encliquetage (4a, 4b, 6a, 6b, 13a, 13b, 14) dans le sens contraire de la fixation contre un retrait sur le segment d'extrémité de la partie de support (2) et est appuyée d'autre part dans le sens de fixation par le biais d'un élément formant ressort (8 ; 17) précontraint sur la partie de support (2).

2. Élément d'actionnement selon la revendication 1,
**caractérisé en ce que** la partie stylisée (3) est un capuchon de fixation servant de bouton-poussoir qui est fixé sur une partie de support (2) servant de barre de compression, en particulier sur une barre de compression d'un levier de frein à main.

3. Élément d'actionnement selon la revendication 1,
**caractérisé en ce que** la partie stylisée (3) est un capuchon de fixation servant de bouton tournant qui est fixé sur un arbre d'actionnement de rotation associé, l'assemblage par encliquetage et/ou le guidage de fixation présentant des éléments de blocage en rotation.

4. Élément d'actionnement selon l'une quelconque des revendications 2 à 3, **caractérisé en ce que** la partie stylisée (3) en tant que capuchon de fixation présente dans la zone de fixation au moins une fenêtre d'encliquetage (4a, 4b), **en ce qu'**au moins un nez d'encliquetage (6a, 6b) élastique est monté sur la partie de support (2), lequel dépasse dans le sens de fixation et dans le sens radial, en biais, de la partie de support (2) et est dimensionné de sorte à rentrer par pivotement, lors de la fixation, élastiquement dans un espace libre dans la zone intérieure du capuchon de fixation (3) et à repivoter lors d'un recouvrement de la fenêtre d'encliquetage (4a, 4b) dans celle-ci et à s'appuyer sur l'arête de fenêtre (7a, 7b) se trouvant dans le sens de fixation.

5. Élément d'actionnement selon la revendication 4,
**caractérisé en ce qu'**un élément formant ressort (8) est monté sur la partie de support (2) en décalé dans le sens de fixation par rapport à l'au moins un nez d'encliquetage (6a, 6b), sur lequel s'appuie le capuchon de fixation (3) sous précontrainte.

6. Élément d'actionnément selon la revendication 5,
**caractérisé en ce que** l'élément formant ressort est au moins un nez élastique dépassant élastiquement radialement de la partie de support ou un collet élastique (8) circulaire, sur lequel s'appuie un gradin d'appui (5) à l'intérieur du capuchon de fixation (3).

7. Élément d'actionnement selon l'une quelconque des revendications 4 à 6, **caractérisé en ce qu'**au moins deux fenêtres d'encliquetage (4a, 4b) décalées sur le pourtour et des nez d'encliquetage (6a, 6b) associés sont montés, les fenêtres d'encliquetage (4a, 4b) et les nez d'encliquetage (6a, 6b) associés présentant pour un encliquetage étagé différentes positions longitudinales et/ou différents développements longitudinaux.

8. Élément d'actionnement selon l'une quelconque des revendications 1 à 3, **caractérisé en ce que** la partie stylisée (3) en tant que capuchon de fixation présente au moins un, de préférence plusieurs nez d'encliquetage (13a, 13b) dépassant élastiquement dans la zone intérieure du capuchon, en biais dans le sens contraire de fixation, et **en ce qu'**une saillie d'encliquetage (14) associée aux nez d'encliquetage (13a, 13b), de préférence un collet d'encliquetage, est montée sur la partie de support (2), les nez d'encliquetage (13a, 13b) pivotant élastiquement radialement vers l'extérieur lors de la fixation et étant guidés par le biais de la saillie d'encliquetage (14) et repivotant et s'encliquetant ensuite derrière la saillie d'encliquetage (14) radialement vers l'intérieur.

9. Élément d'actionnement selon l'une quelconque des revendications 4 à 8, **caractérisé en ce qu'**un élément formant ressort de pression (17) est disposé entre la surface frontale (15) côté extrémité de la partie de support (2) et la surface intérieure du couvercle de capuchon (16).

10. Élément d'actionnement selon l'une quelconque des revendications 1 à 9, **caractérisé en ce que** la partie de support (2) et la partie stylisée (3) sont réalisées à symétrie de révolution autour d'un axe longitudinal (18).

11. Élément d'actionnement selon l'une quelconque des revendications 2 à 10, **caractérisé en ce que** la partie de support (2) et/ou la partie stylisée (3) et/ou l'élément formant ressort (8 ; 17) est fabriqué au moins en partie en matière plastique.
